(19) Europäisches Patentamt
European Patent Office
Office européen des brevets

(11) **EP 2 833 271 A1**

(12) **EUROPEAN PATENT APPLICATION**
published in accordance with Art. 153(4) EPC

(43) Date of publication:
**04.02.2015 Bulletin 2015/06**

(51) Int Cl.:
***G06F 17/30*** (2006.01)

(21) Application number: **12876975.9**

(22) Date of filing: **26.10.2012**

(86) International application number:
**PCT/CN2012/083622**

(87) International publication number:
**WO 2013/170587 (21.11.2013 Gazette 2013/47)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **14.05.2012 CN 201210146651**

(71) Applicant: **Huawei Technologies Co., Ltd
Shenzhen, Guangdong 518129 (CN)**

(72) Inventors:
• **LIU, Yang
Shenzhen
Guangdong 518129 (CN)**

• **WANG, Dong
Shenzhen
Guangdong 518129 (CN)**
• **LIU, Jie
Shenzhen
Guangdong 518129 (CN)**

(74) Representative: **Pfenning, Meinig & Partner GbR
Patent- und Rechtsanwälte
Theresienhöhe 11a
80339 München (DE)**

(54) **MULTIMEDIA QUESTION AND ANSWER SYSTEM AND METHOD**

(57)     The present invention is applicable to the field of network question answering technologies, and provides a multimedia question answering system and method. The system includes: a question input unit, configured to receive a text question input by a user; a parsing unit, configured to acquire feature information and a semantic category of the text question; a category determining unit, configured to determine whether the semantic category exists in a preset multimedia database; a similarity acquiring unit, configured to, when a determination result is yes, match the feature information with all text features corresponding to the semantic category in the database, so as to acquire a similarity between each text feature and the feature information; and a multimedia answer output unit, configured to acquire a corresponding text feature when the similarity is greater than a preset threshold, and output multimedia answer information corresponding to the text feature and prestored in the multimedia database. The present invention makes an answer to the text question input by the user more effective, intuitive, vivid, and richer, thereby significantly improving user experience effect.

FIG. 1

**Description**

**TECHNICAL FIELD**

The present invention belongs to the field of network question answering technologies, and in particularly to a multimedia question answering system and method.

**BACKGROUND**

A question answering system is an advanced form of an information retrieval system. The question answering system includes an automatic question answering system and a non-automatic question answering system according to a working principle thereof; and includes a closed field (based on a field database) and an open field (based on a network) according to a knowledge scope covered by the system. With popularization of the Internet and an exponential increase of network users, a network-based automatic question answering system has become a focused research direction having a broad prospect in the field of artificial intelligence and natural language processing. The network-based automatic question answering system comprehensively applies knowledge showing, information retrieval, natural language processing technologies, and the like. The automatic question answering system is capable of returning a simple and accurate result to a user rather than some relevant web pages when the user inputs a question in a natural language. Compared with a traditional search engine, the automatic question answering system is more convenient and accurate.

Currently, a research on the automatic question answering system still focuses on text information, and expression forms of a question and an answer are the text information. A research on the text automatic question answering system originates in the 60s of the last century, and is used in a man-machine dialog of an expert system at first. BASEBALL and LUNAR are the earliest text question answering systems. They are two expert systems for knowledge of the baseball and the moon, and they can answer relevant questions asked by a user. Certainly, they are relevant to information of a professional field with a relatively narrow information range. With a TREC competition task organized by the American national standards institute in the 1990s, the automatic text question answering system has become a research hotspot gradually, and relevant fields become broader. Till now, the text automatic question answering system has been applied to various fields, such as the super computer Watson of IBM and the Siri semantic control service introduced by Apple Inc. Technologies included by a text-based automatic question answering system includes: natural language processing, information retrieval, knowledge showing, semantic understanding, and the like. Usually text information in a question of a user is first parsed by using the natural language processing, a keyword is extracted, and then accurate information in the question of the user is analyzed and expressed by the knowledge representation and semantic understanding method, which is also called a question analysis module. In this module, question categorization, keyword extraction and keyword expansion are usually included. By using the question analysis module, the system deduces a factor of an answer to the question, and then quickly finds relevant information in an existing document database by using the information retrieval module. In order to ensure that a retrieval result exists, the document database needs to be large enough. At present, a submodule usually downloads information from the Internet by calling a search engine.

Although the research on the automatic question answering system has made great progress, the text automatic question answering system still has defects in terms of intuitiveness and richness of information.

**TECHNICAL FIELD**

An objective of embodiments of the present invention is to provide a multimedia question answering system and method, aiming at solving problems that an answer related to a question and output by an existing text question answering system is not intuitive enough, content is not rich enough, and effect of user experience is not good enough.

Technical solutions

Embodiments of the present invention are implemented by providing a multimedia question answering system, where the system includes:

a question input unit, configured to receive a text question input by a user;
a parsing unit, configured to acquire feature information and a semantic category of the text question by parsing;
a category determining unit, configured to determine whether the semantic category exists in a preset multimedia database;
a similarity acquiring unit, configured to, when a result output by the category determining unit is yes, match the feature information with all text features corresponding to the semantic category in the multimedia database, so as to acquire a similarity between each text feature and the feature information; and
a multimedia answer output unit, configured to acquire a corresponding text feature when the similarity is greater than a preset threshold, and output multimedia answer information corresponding to the text feature and prestored in the multimedia database.

Another objective of the embodiments of the present invention is to provide a multimedia question answering method, where the method includes the following steps:

receiving a text question input by a user;
acquiring feature information and a semantic category of the text question by parsing;
determining whether the semantic category exists in a preset multimedia database;
when the determining result is yes, matching the feature information with all text features corresponding to the semantic category in the multimedia database, so as to acquire a similarity between each text feature and the feature information; and
acquiring a corresponding text feature when the similarity is greater than a preset threshold, and outputting multimedia answer information corresponding to the text feature and prestored in the multimedia database.

Beneficial effects

In the embodiments of the present invention, a question input unit receives a text question input by a user; a parsing unit acquires feature information and a semantic category of the text question by parsing; a category determining unit determines whether the semantic category exists in a preset multimedia database; when a result output by the category determining unit is yes, a similarity acquiring unit matches the feature information with all text features corresponding to the semantic category in the multimedia database, so as to acquire a similarity between each text feature and the feature information; and a multimedia answer output unit acquires a corresponding text feature when the similarity is greater than a preset threshold, and outputs multimedia answer information corresponding to the text feature and prestored in the multimedia database. In this way, problems that an answer related to a question and output by an existing text question answering system is not intuitive enough, content is not rich enough, and effect of user experience is not good enough is solved, so that an answer automatically pushed to the user is more accurate and effective, answer content is more vivid and richer, thereby meeting the user's requirements such as intelligence and intuitiveness of information acquisition.

**BRIEF DESCRIPTION OF DRAWINGS**

FIG. 1 is a structural diagram of a multimedia question answering system according to Embodiment 1 of the present invention;
FIG. 2 is a structural diagram of a multimedia question answering system according to Embodiment 2 of the present invention;
FIG. 3 is an implementation flowchart of a multimedia question answering method according to Embodiment 3 of the present invention; and
FIG. 4 is an implementation flowchart of a multimedia question answering method according to Embodiment 4 of the present invention.

**DESCRIPTION OF EMBODIMENTS**

To make the objectives, technical solutions, and advantages of the present invention clearer and more comprehensible, the following further describes the present invention in detail with reference to the accompanying drawings and embodiments. It should be understood that the specific embodiments described herein are merely used to explain the present invention but are not intended to limit the present invention.
A specific implementation of the present invention is described in detail with reference to specific embodiments.

**Embodiment 1**

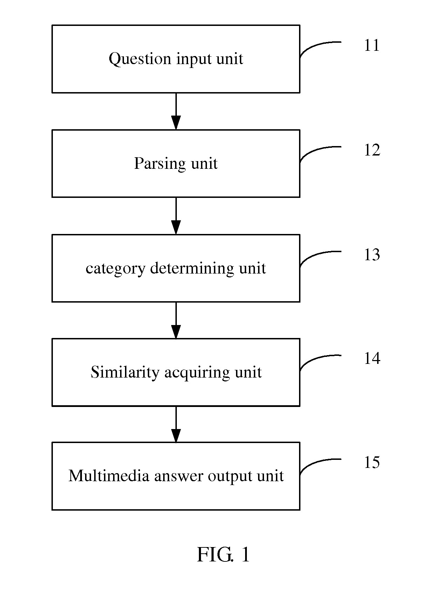

FIG. 1 shows a structure of a multimedia question answering system according to Embodiment 1 of the present invention, and for ease of description, only a part relevant to the embodiment of the present invention is shown.

The multimedia question answering system includes a question input unit 11, a parsing unit 12, a category determining unit 13, a similarity acquiring unit 14, and a multimedia answer output unit 15,

The question input unit 11 is configured to receive a text question input by a user.

The parsing unit 12 is configured to acquire feature information and a semantic category of the text question by parsing.

The semantic category, or referred to as a semantic key word, is multi-source information, which not only includes a text keyword extracted by using a natural language processing tool, but also includes a visual keyword which is formed by a visual concept keyword, a character name, a landmark name, and the like, for example, semantic categoryes of ocean, a flower, a mountain, food, and holiday. The feature information includes a bag-of-words model, a bigram text feature, a head word, and a list of related words of a keyword.

In the embodiment of the present invention, when a user needs to acquire an answer to a text question, the user may online input the text question on a search engineer or at a specific search location. The question input unit 11 receives the text question input by the user. At this time, the parsing unit 12 is capable of implementing parsing of a natural language, which specifically is, acquiring feature information and a semantic category relevant to the text question by parsing. For example, when the user inputs a text question of "How to cook a beefsteak?", feature information such as beefsteak, cooking a beefsteak and a method for cooking a beefsteak may be acquired, and the semantic category belongs to food. For another example, a text question of "Does Java support VoIP?" input by the user belongs to a semantic question of a program language type; a question of "Which countries have won the Football World Cup" belongs to a question of football game; the semantics of a question such as "When is the spring festival of 2012?" is a festival.

The category determining unit 13 is configured to determine whether the semantic category exists in a preset multimedia database.

In an embodiment of the present invention, when it is determined whether a semantic category exists in the preset multimedia database, a similarity with all semantic categoryes in the database is acquired by matching a semantic category of the input text question with all categories in the database, or by using a pre-established probabilistic latent semantic model, and then put the text question into a total of one or more semantic categoryes of a corresponding database when the similarity is greater than a preset value. That is, a result output by the category determining unit 13 is yes, otherwise, a result output by the category determining unit 13 is no.

**[0020]** The similarity acquiring unit 14 is configured to, when a result output by the category determining unit 13 is yes, match the feature information with all text features corresponding to the semantic category in the multimedia database, so as to acquire a similarity between each text feature and the feature information.

The multimedia question answering system further includes:

a text answer output unit, configured to, when the result output by the category determining unit 13 is no or when none of the similarity output by the similarity acquiring unit 14 is greater than a preset threshold, directly acquire text answer information relevant to the text question from a network and output the acquired text answer information.

In the embodiment of the present invention, large quantities of correspondences among a semantic category, a text feature, and multimedia answer information that are corresponding to the text feature are previously stored in the preset multimedia database. When a user searches for an answer to a text question, after the parsing unit 12 acquires feature information and a semantic category of the text question, firstly the category determining unit 13 determines whether the semantic category exists in the preset multimedia database. Through the determining process, a matching range can be narrowed. A matching process does not need to be performed for a semantic category that does not exist in the database, so that an answer outputting speed can be increased. Under normal conditions, because an answer to a non-category question is only limited to a simple answer of "yes" or "no", the preset multimedia database has no text feature or corresponding multimedia answer to the non-category question. If the text question input by the user belongs to the non-category, even a semantic category to which the question belongs exists in the multiemdia database, no corresponding text feature exists. If a result of matching feature information of the non-category question with all features under the category to which the non-category question belongs in the multimedia database is yes, an acquired similarity is relatively small or none of the similarity is greater than a preset threshold, where the preset threshold is selected empirically, such as 0.8. In this case, text answer information relevant to the text question may be acquired and output from the network directly by using the text answer output unit, thereby reducing a burden of the multimedia database, reducing storage space of the multimedia database, and reducing a cost for database establishment.

In the embodiment of the present invention, when a result output by the category determining unit 13 is yes, such as a How-to type question of "How to cook a beefsteak?", the similarity acquiring unit 14 may match a corresponding "beefsteak cooking method" and other feature information with all text features corresponding to the food semantic category in the multimedia database, thereby acquiring a similarity corresponding to all text features. Specifically, a similarity acquiring method, or referred to as a matching method, may acquire a corresponding similarity by using word frequency statistics, DTW (Dynamic Time Warping) measurement, bag-of-words model modeling, and the like.

The multimedia answer output unit 15 is configured to acquire a corresponding text feature when the similarity is greater than the preset threshold, and output the multimedia answer information corresponding to the text feature and prestored in the multimedia database.

The preset threshold may be an empirical value set according to an actual need. The multimedia answer information is mainly divided into three kinds, that is: text information combined with image information, text information combined with video information, and text information combined with video information and image information, where text answer information is only formed by the text information.

In the embodiment of the present invention, for a question of "Who is Chairman Mao?", a corresponding semantic category is politics or celebrity. Assuming that all text features corresponding to the politics or celebrity semantic category in the multimedia database include text features of "Chairman Mao"and"MAO Zedong", it is obvious that a similarity between the text feature and the text question input by the user is the highest, and the similarity is higher than the preset threshold, and the output multimedia answer information is answer information corresponding to the text feature information in the multimedia database, such as, text information of "MAO Zedong"and multimedia information such as an image of Chairman Mao are output. In addition, a plurality of text features with relatively high similarities may be acquired, and the multimedia answer output unit 15 outputs a plurality of pieces of multimedia answer information corresponding to the plurality of text features and prestored in the multimedia database, so as to facilitate the user's selection of a more reasonable answer.

In addition, before the input unit 11 is triggered, the multimedia question answering system further includes:

a collecting unit, configured to collect various text questions and corresponding text answers in a network question answering community;

a feature extraction unit, configured to acquire a text feature and a keyword of each text question or the corresponding text answer on the network or both;

a multimedia determining unit, configured to determine, according to the text feature of any one text question, whether the any one text question needs to acquire corresponding multimedia answer information;

a multimedia answer acquiring unit, configured to, when the multimedia determining unit output result is yes, acquire, according to the keyword of the any one text question or the corresponding text answer or both, one piece or a plurality of pieces of multimedia answer information corresponding to the any one text question;

a category acquiring unit, configured to acquire, according to the keyword of the any one text question or the corresponding text answer or both, a semantic category belonging to the multimedia database and corresponding to the any one text question; and

a relationship establishing unit, configured to establish a correspondence among the semantic category, the text feature, and the one piece or a plurality of pieces of multimedia answer information that are corresponding to the any one text question in the multimedia database.

Specifically, the foregoing collecting unit, feature extraction unit, multimedia determine acquiring unitt multimedia answer acquiring unit, category acquiring unit, and database establishing unit of the foregoing embodiment describes a process of establishing, under offline, a correspondence among the semantic category, the text feature, and the multimedia answer information in the multimedia database , and a specific description is as that in Embodiment 2 and is not described again herein.

In the embodiment of the present invention, a multimedia question answering system online acquires a text question in real time put forward by a user and received by a question input unit 11, parses the text question by using a parsing unit 12, so as to acquire feature information and a semantic category of the text question, and when a category determining unit 13 determines that the semantic category exists in a preset multimedia database, a similarity acquiring unit 14 performs similarity measurement on the feature information with all text features corresponding to the semantic category in the multimedia database. Finally, a multimedia answer output unit 15 returns one piece or a plurality of pieces of multimedia answer information whose similarity is greater than a preset threshold to the user, thereby implementing an automatic multimedia question answering system. By using a manner of intelligently analyzing the text question with reference to multimedia information such as an image and a video, the text question is answered intuitively, effectively, and vividly, thereby satisfying a need of the user, and user experience effect is enhanced greatly.

## Embodiment 2

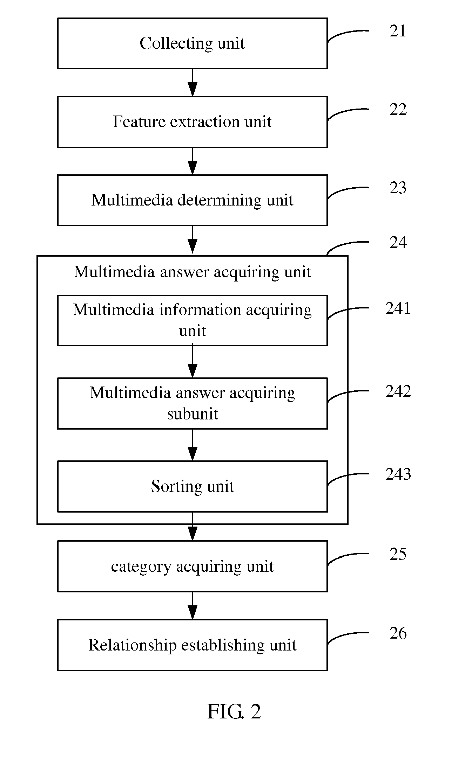

FIG. 2 shows a structure of a multimedia question answering system according to Embodiment 2 of the present invention, which specifically is a structural diagram of data correspondence in a multimedia database in the multimedia question answering system, and for ease of description, only a part relevant to the embodiment of the present invention is shown.

Based on detailed descriptions of the foregoing Embodiment 1, the multimedia question answering system further includes a collecting unit 21, a feature extraction unit 22, a multimedia determining unit 23, a multimedia answer acquiring unit 24, a category acquiring unit 25, and a relationship establishing unit 26:

The collecting unit 21 is configured to collect various text questions and corresponding text answers in a network question answering community.

In the embodiment of the present invention, the collecting unit 21 is mainly configured to acquire a text question at an offline phase in a network question and answer community and a text answer set corresponding thereto. For example, text questions used to be put forward by a user and corresponding text answers are collected from an online network question answering community such as Yahoo! Answers, Naver, Google Answers, and eHow. By enriching visual information of answers of the text questions, a multimedia database, or referred to as a multimedia database for a question and a corresponding answer, that is, a multimedia answer database corresponding to the text question is established.

The feature extraction unit 22 is configured to acquire a text feature and a keyword of each text question or the corresponding text answer or both from the network.

In the embodiment of the present invention, the main function of the feature extraction unit 22 is to analyze each text question or the corresponding text answer or both, which includes a pre-processing operation such as English word string identification (tokenization), word segmentation, part-of-speech tagging (Part-of-speech Tagging, POS), and stop word filtering (stop word), and further extraction of a relevant keyword and text feature information, and the like.

The meaning of tokenization is to identify an Engish word string, with a purpose of converting a character string into a word string so as to reduce information uncertainty, and may be considered as a word identification (token) process simply. Because not all words are neat, tokenization may effectively remove meaningless content such as a symbol and punctuation. The word segmentation is mainly performed on Chinese language, Chinese word segmentation refers to segmenting a Chinese sequence into independent words, and the word segmentation is to reorganize a continuous character sequence into a word sequence according to a certain regulation. Say popularly, the Chinese word segmentation uses a machine to add a mark between words in a Chinese text. Part-of-speech tagging (POS): in natural language processing, the part-of-speech tagging is also referred to as grammar tagging or word identification, and is a process of marking a part-of-speech of a word in a sentence according to a definition and context of the word. In brief, part-of-speech dividing is performed on a word, such as a noun, a verb, a conjunction, and an adverb. Stop word filtering: stop word refers to a word that is used frequently and has no retrieval value, and usually is filtered when met by a search engine. Therefore, in order to save time and space, a word of this kind should be filtered as much as possible.

Keyword extraction: the keyword extraction basically is filtering performed on a remaining text word after the foregoing steps, and a word that can stand for an original text as much as possible is selected, such word whose part-of-speech can be a noun or a verb. Text feature extraction: for different text processing applications, extraction manners for the text feature are also different. Because characters of text information described by different text features are different, a frequently used text feature includes a keyword bag-of-words model (bag-of-words model), a bigram text feature, head words, a list of class-specific related words and verbs, and the like.

The multimedia determining unit 23 is configured to determine, according to a text feature of any one text question, whether the any one text question needs to acquire corresponding multimedia answer information.

The type of the multimedia answer information may be divided into three kinds: (1) text+image; (2) text+video; (3) text+image+video. It is obvious that in an answer, only information including only text does not belong to the multimedia information. A determining process is mainly divided into two steps: firstly, a question is determined based on a question word in the text question, and then some simple questions may be directly determined whether to be answered by using a text answer or not. Secondly, a remaining question is determined by using a Naive Bayes categorizer. Some examples are made for categorizing in the first step herein: a non-category question such as "Does Java support VoIP?" may be answered by using the text answer alone. A paired-choice response such as "Which country has a larger land area, China or Australia?" may be answered by using the multimedia information of text+image. A definition category question such as "When is the spring festival of 2012?"may also be answered by adding multimedia information. However, in the second step, for a question where corresponding multimedia answer information needs to be acquired, a set of some text features of the text question needs to be extracted, which includes bigram text features, head words, a list of class-specific related words, and the like. In addition, some text features may be extracted from a corresponding text answer set, such as a verb and bigram text features. A categorizer (such as the Naive Bayes categorizer) is constructed by feature training so as to perform categorization work, and then that whether each text question needs to be answered by multimedia answer information may be determined.

A simple example is made, if a question in an online question set is "What is the name of the current American president?", a conclusion obtained through the multimedia determining unit 23 is that the question can be answered by text information, and multimedia information needs not to be added to an answer to the question. The system finally outputs single text content "Obama". If a question in an online question set is"Who is the current American president", after the multimedia determining unit 23 analyzes the question, the multimedia information needs to be added to the question answer, and a possible conclusion is that answering the question by using text and image information. The system finally outputs multimedia information such as a brief introduction, a head portrait, and a picture of Obama. If a question in an online question set is "How to change a diaper for a baby?", the multimedia determining unit 23 may categorize the question into a question that needs to be answered by text, image, video, and other information because the text information and the image information cannot clearly show a user how to change a diaper for a baby but the video information may implement that.

The multimedia answer acquiring unit 24 is configured to, when an output result of the multimedia determining unit 23 is yes, acquire, according to the keyword of the any one text question or the corresponding text answer or both, one piece or a plurality of pieces of multimedia answer information corresponding to the any one text question.

As shown in FIG. 2, the multimedia answer acquiring unit 24 specifically includes:

a multimedia information acquiring unit 241, configured to acquire, according to the keyword of the any one text question or the corresponding text answer or both, one piece or a plurality of pieces of multimedia information relevant to the keyword;

a multimedia answer acquiring subunit 242, configured to acquire, according to a pre-established mapping between the text question and the multimedia information, one piece or a plurality of pieces of multimedia answer information corresponding to the keyword; and

a sorting unit 243, configured to sort the one piece or a plurality of pieces of multimedia answer information according to a pre-established and gradient Boosting based sorting algorithm and a relevancy with the any one text question.

In the embodiment of the present invention, in order to collect multimedia data relevant to a text question, a multimedia information acquiring unit 241 takes the keyword of the any one text question or the corresponding text answer or both as an input of a network search engine so as to acquire relevant multimedia information, and the relevant multimedia information may be one piece or a plurality pieces. In this case, an available network resource includes an image and video sharing website such as Flickr and YouTube. It can be known that when a search result is analyzed, under an actual condition, not all the multimedia information relevant to the keyword is relevant to the text question, that is, not all of them are multimedia answer information. In addition, in order to exclude irrelevant information and accurately acquire the one piece or a plurality of pieces of multimedia answer information corresponding to the keyword, filtering needs to be performed by using the pre-established mapping between the text question and multimedia information, and the mapping is mainly acquired by the following units:

an image information acquiring unit, configured to acquire, in a network image resource according to the keyword, visual image information corresponding to the keyword; and

a mapping establishing unit, configured to establish a mapping between the text question and the multimedia information by using a visual concept detection sub-algorithm.

In order to train the visual concept detection sub-algorithm, large quantities of training image samples relevant to visual concept are needed, a keyword processed and input by a natural language needs to be taken as an input, and the relevant image samples need to be collected from a network image search engine, such as Baidu Image and Google Image, so as to accurately establish a mapping between text questions and mapping between a text question and multimedia information, thereby quickly and effectively finding a multimedia resource most relevant to the text question for matching. In the embodiment of the present invention, a visual concept detection sub-algorithm combined with AdaBoost and Z-grid algorithm is adopted, thereby effectively solving a problem of a high computational complexity of the traditional AdaBoost, and saving training time. The implementation principle of the visual concept detection sub-algorithm is as follows:

Firstly, selecting an optimal feature in feature space in the traditional AdaBoost algorithm is converted into finding a nearest neighbor in a function space. Secondly, the nearest neighbor is found quickly in the function space by using a Z-grid indexed mode so as to accelerate the traditional AdaBoost algorithm. In the traditional AdaBoost, in order to ensure algorithm accuracy, the number of weak categorizers is usually in an order of magnitude of one hundred thousand. Therefore, in each iteration, an optimal one needs to be selected from hundreds of thousands of features. Therefore, the computational complexity $O(NT)$ increases with the growing of $T$ ($N$ is the number of training samples, and $T$ is the number of the weak categorizers). The concept detection sub-algorithm put forward in the present invention is to solve a problem that the number of $T$ is excessively big, and a problem of selecting an optimal feature in the feature space is converted into a problem of selecting a nearest neighbor in the function space. Each weak categorizer in the feature space may be mapped into one point in an N-dimensional function space. A query point $Q_t$ is set in the function space during each iteration. Each sub-space after segmentation corresponds to a unique index value so as to perform a quick index on the query point. Firstly, a sub-space whose cumulative probability is greater than $P\alpha$ is searched through hierarchical search; and then a nearest neighbor $P_i(x)$ of the $Q_t$ is found by using weight scope searching and filtering in the sub-space.

For example, when a semantic concept is mentioned in the text question or the text answer, for example, how to identify an LV bag? The "LV bag"is a main semantic category concept in the text. In the system, the "LV bag" is taken as a keyword to search for and download an image of the "LV bag" as a positive sample from a network search engine such as Google Image, Baidu image, and Flickr, and other images irrelevant to the "LV bag"serve as negative samples. A categorizer is trained by using an Adaboost concept training algorithm and a Z-grid semantic concept training algorithm, and the categorizer may give a confidence level that whether a given image is relevant to the "LV bag". Information with a high confidence level is saved as multimedia answer information relevant to the question, thereby implementing effective association between the multimedia answer information and text information.

Then, the multimedia answer acquiring subunit 242 acquires, according to a pre-established mapping between the text question and the multimedia information, one piece or a plurality of pieces of multimedia answer information corresponding to the keyword, filters out other irrelevant multimedia information, where the multimedia answer information accurately reflects answer information of the text question to some extent, and the answer information includes abundant multimedia information. During an actual operation, because there is usually a plurality of pieces of acquired multimedia answer information, and a relevancy of each piece of information with the text question is different, a sorting unit 243 needs to be used to effectively sort the one piece or a plurality of pieces of multimedia answer information according to the relevancy with the any one text question, so that when a question input by the user is answered online, the information can be displayed according to the relevancy, thereby increasing user usage experience. A process for establishing the gradient Boosting based sorting algorithm used in the embodiment of the present invention is as follows:

For two feature vectors x and y given to the multimedia answer information, if x>y, it indicates that a video to which x belongs is more suitable to serve as the answer to the question than that of y. A feature set S, S={<xi,yi>|xi>yi,i=1,...,N} corresponding to the feature vectors x and y of the two videos may be obtained. A sorting problem actually is a problem of a sorting learning function $h \in H$, where H is a function group, and h is one of the functions. A function value corresponding to the feature vector of the video answer information may reflect relevancy of the video answer information to a question. For example: if xi>yi, i=1,...,N, a corresponding function value should be h(xi)≥h(yi) as much as possible. A value-at-risk R of the sorting function h may be illustrated by the following formula:

$$\mathbf{R}(\mathbf{h}, \tau) = \frac{1}{2} \sum_{i=1}^{N} (\max\{0, \mathbf{h}(\mathbf{yi}) - \mathbf{h}(\mathbf{xi}) + \tau\})^2 - \lambda \tau^2 \qquad , (1)$$

Finally, an optimization problem $\min h \in H R(h)$ needs to be solved, and therefore we use a gradient Boosting algorithm to obtain a sorting function h by learning, where two parameters need to be designated in advance, one is a convergence factor λ, and the other is the number of iterations N. The two parameters are obtained by cross validation in an experiment.

For example, a video set is collected for a same text question "How to make a chocolate cake?". When only two videos are sorted, the sorting may be considered according to the following aspects. According to users" votes and comments, if more affirmative votes and more praising texts are given to a video on a video website where the video is downloaded, it indicates that the rank of the video is higher than that of the other video. Many network videos are repeatedly submitted by users, and if a video is downloaded with more repeated editions, it indicates that the users like the video very much and the video should be sorted in the front. In addition, the higher the relevancy returned by visual concept detection is, it indicates that the video is more relevant to the text information of the user's question, and the video should be sorted in the front. The gradient Boosting automatically sorts the multimedia information by learning information about these different aspects, thereby comprehensively considering multi-modal information such as textual, visual, and network information, and implementing effective sorting.

The category acquiring unit 25 is configured to acquire, according to the keyword of the any one text question or the corresponding text answer or both, a semantic category belonging to the multimedia database and corresponding to the any one text question.

In the embodiment of the present invention, the multimedia question answering system further includes:

a database semantic category establishing unit, configured to establish a probabilistic latent semantic model according to a plurality of preset semantic categoryes established in the multimedia database with reference to the keyword of the each text question or a corresponding text answer or both.

In an initial state of the multimedia database, only a plurality of semantic categoryes is included, and a corresponding semantic keyword can be extracted based on the keyword of the various text questions or the corresponding text answer or both acquired from the network question answering community, where the semantic keyword is multi-source information, which not only includes a text keyword extracted by a natural language processing tool, such as a beefsteak and a car, but also includes a visual concept key word, a character name, and a landmark name. A field relevant to a question and an objective usually can be deduced according to the semantic keyword, and the extracted semantic keyword is taken as a training sample, which is capable of establishing the probabilistic latent semantic model. A probability that each text question or a corresponding text answer belongs to each semantic category can be obtained through the probabilistic latent semantic model with reference to an existing EM algorithm principle, so that a corresponding semantic category when the probability is greatest serves as a semantic category to which the text question belongs. From an angle of the physical meaning, for a text question or a corresponding text answer or both, a corresponding relevant semantic keyword thereof is compared with a semantic category prestored in the multimedia database, so that a reasonable category tag corresponding to the text question or the corresponding text answer or both can be generated.

The relationship establishing unit 26 is configured to establish a correspondence among the semantic category, the text feature, and the one piece or a plurality of pieces of multimedia answer information that are corresponding to the any one text question in the multimedia database.

In the embodiment of the present invention, under an offline condition, the relationship establishing unit 26 may finally generate a multimedia database including a relationship among the semantic category, the text feature, and the corresponding one piece or a plurality of pieces of multimedia answer information that are corresponding to the any one text question. For example, for a text question "How to drive an automatic car?", a semantic category included in the multimedia database may be divided into two kinds of semantics, or referred to as concepts: one is a target concept, which is corresponding a noun in a corresponding text that is used to describe an object of an action; the other is an action concept, which is corresodning to a gerund form that combines a corresponding verb and a noun and serves as an action concept describing an action in a question. In the example, a corresponding semantic category may be a noun concept "car" or "automatic car", and a corresponding verb concept is "driving" or "driving an automatic car". The text feature corresponding to the question may be "Learning to drive", "Automatic car", and the like, and suitable multimedia answer information should include a scenario content that a person is driving a car or is teaching how to drive a car. A relationship among a semantic category, a text feature, and a corresponding multimedia answer that are corresponding to a question may be established in the multimedia database. Different questions may belong to a same category, and corresponding text features may be different.

The multimedia question answering system provided in the embodiment of the present invention may further include a database update unit, configured to update the correspondence among the ssemantic category, the corresponding text feature and the multimedia answer information in the multimedia database in real time.

In the embodiment of the present invention, after a text question and a corresponding text answer are detected in real time to be added to a network question answering community, and after proper a pre-processing operation is performed on the text question and the text answer, the text feature, the keyword and the semantic category of the text question or the corresponding text answer or both are extracted. When an established multimedia database includes the semantic category and needs to acquire the multimedia answer information accurately corresponding to the question, the multimedia answer information corresponding to the question is acquired. A text feature and a multimedia answer corresponding to the question are stored in a location corresponding to the semantic category and storing the text feature and multimedia answer, so as to update the database. Otherwise, the foregoing operations need not to be performed. The update process may be performed by the feature extraction unit 22, the multimedia determining unit 23, the multimedia answer acquiring unit 24, the category acquiring unit 25 and the relationship establishing unit 26 so as to update the database, thereby implementing online update processing of the media database in real time, and ensuring real time of the automatic question answering system.

In the embodiment of the present invention, the multimedia question answering system automatically extracts different text features to implement effective categorization of different text questions. By introducing the multimedia database, the feature of the text question and the multimedia answer are effectively combined, so that the question can be solved more abundantly, vividly, and intuitively when the multimedia database is used to push an answer to a question, thereby effectively satisfying a user need. Because the multimedia database can be updated in real time, an objective that data in disorder, or referred to as a text question and an answer, are automatically categorized into organized and structural data.

## Embodiment 3

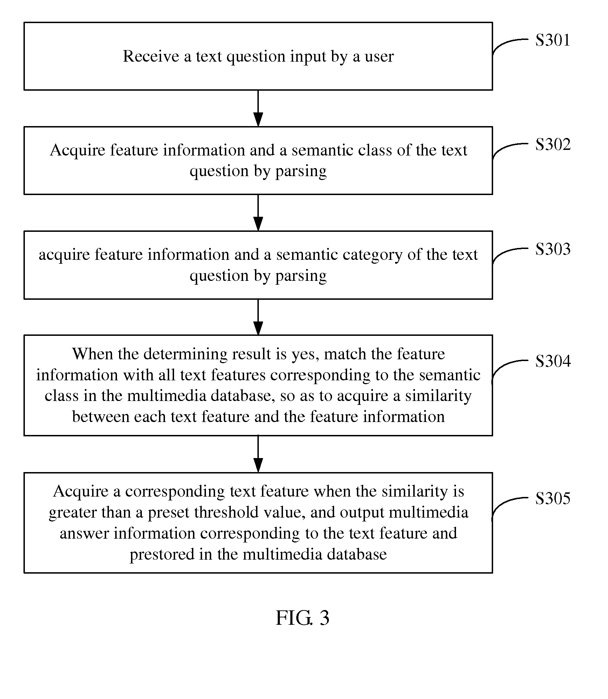

FIG. 3 shows an implementation flow of a multimedia question answering method according to Embodiment 3 of the present invention; and details are as follows:

In step S301, receive a text question input by a user.

In step S302, acquire feature information and a semantic category of the text question by parsing.

The semantic category, or referred to as a semantic keyword, is multi-source information, which not only includes a text keyword extracted by a natural language processing tool, but also includes a visual keyword which is formed by a visual concept keyword, a character name, a landmark name, and the like, for example, semantic categoryes of ocean, a flower, a mountain, food, and holiday. The feature information includes a bag-of-words model, a bigram text feature, head words, relevant word list, and the like of a keyword.

During a specific implementation process, when a user inputs a text question on a search engine or at a specific search location, feature information and a semantic category relevant to the text question are acquired by parsing. For example, when an input text question is "Which countries have won the Football World Cup?", a semantic category corresponding to the question may be "Football World Cup", "Football countries" and the like, and corresponding feature information may be "World Cup", "Which countries have won the World Cup", and the like.

In step S303, determine whether the semantic category exists in a preset multimedia database.

In the embodiment of the present invention, when it is determined whether a semantic category exists in the preset multimedia database, specific steps are as follows: a semantic category of the input text question is matched with all categories in the database, or a similarity between all semantic categoryes in the database is acquired by using a pre-established probabilistic latent semantic model, and then the text question is put into a total of one or a plurality of semantic categoryes of a database when the similarity is greater than a preset value.

In step S304, when the determination result is yes, match the feature information with all text features corresponding to the semantic category in the multimedia database, so as to acquire the similarity between each text feature and the feature information.

Specifically, text answer information relevant to the text question is directly acquired and output from the network when a determining result is no, or when none of the similarity between each text feature and the feature information is greater than the preset threshold.

During a specific implementation process, a plurality of correspondences among the semantic category, the text feature under the semantic category and multimedia answer information corresponding to the text feature are previously stored in the preset multimedia database. When a user searches for an answer of a text question, after feature information and a semantic category of the text question are obtained, firstly it is determined whether the semantic category exists in the preset multimedia database. Through the determining process, the matching range can be narrowed. When the semantic category does not exist in the database, a matching process does not need to be performed, and an answer outputting speed can be increased; or, when a semantic category corresponding to the text question exists in the multimedia database, after the feature information is matched with all text features corresponding to the semantic category in the multimedia database, and when the acquired similarity between each text feature and the feature information is not greater than a preset threshold, the text answer information relevant to the text question may be acquired from the network and output directly, thereby reducing a burden of the multimedia database, reducing storage space of the multimedia database, and reducing a cost for database establishment. When it is determined that the semantic category of the text question exists in the preset multimedia database, corresponding feature information is matched with all text features under the semantic category in the multimedia database, thereby obtaining a similarity corresponding to all text features. Specifically, a similarity acquiring method may be as follows: acquiring a corresponding similarity by word frequency statistics, DTW measurement, bag-of-words model modeling, and the like.

In step S305, acquire a corresponding text feature when the similarity is greater than the preset threshold, and output multimedia answer information corresponding to the text feature and prestored in the multimedia database.

The preset threshold may be an empirical value set according to an actual need. The multimedia answer information is mainly divided into three kinds, that is: text information combined with image information, text information combined with video information, and text information combined with video information and image information, where text answer information is only formed by the text information.

In a specific implementation process, for a How-to category question of "How to cook a beefsteak?", assuming that all corresponding text features in a "Food" semantic category in the multimedia database include a text feature of "a cooking method of beefsteak". It is obvious that the similarity between the text feature and the text question input by the user is the greatest, and output multimedia answer information is answer information corresponding to the text feature information in the multimedia database. In addition, In addition, a plurality of text features whose similarity is greater than the preset threshold may be acquired, and a plurality of pieces of multimedia answer information corresponding to the plurality of text features and prestored in the multimedia database is output, so as to facilitate the user's selection of a more reasonable answer.

In the embodiment of the present invention, the multimedia question answering method implements that, answer information relevant to the text question is output automatically, effectively, and accurately according to feature information and a semantic category of a text question input by a user with reference to a preset multimedia database, and the answer information is presented to the user intuitively and vividly in a form of multimedia information such as an image and a video, thereby enriching a knowledge scope of the user, and enhancing user experience.

**Embodiment 4**

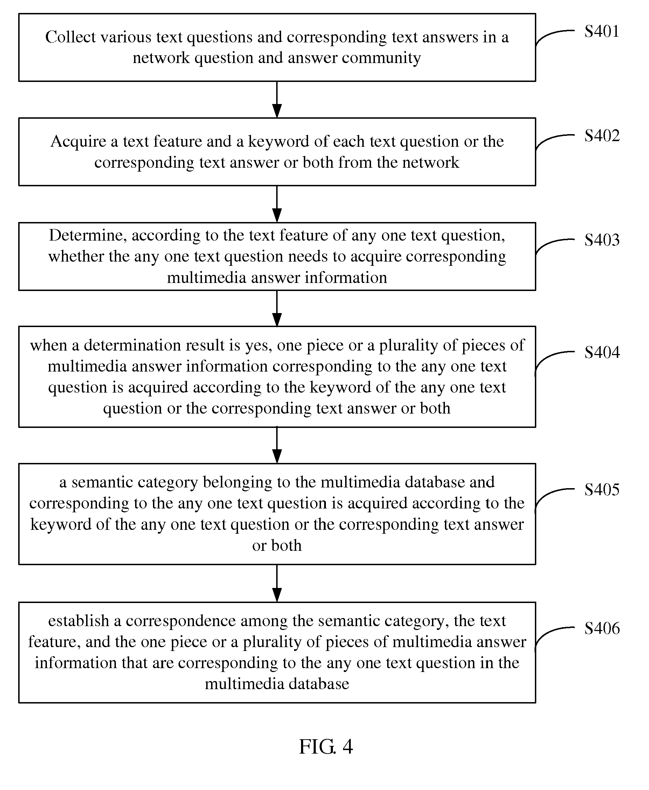

FIG. 4 shows an implementation flow of a multimedia database establishment method in a multimedia question answering method according to Embodiment 4 of the present invention, which specifically is a multimedia database establishment process in the method, and details are as follows:

In step S401, collect various text questions and corresponding text answers in a network question answering community.

Specifically, various text questions and text answer sets corresponding thereto in a network question answering community are acquired. For example, text questions used to be put forward by users and corresponding text answers are collected from an online network question answering community such as Yahoo! Answers, Naver, Google Answers, and eHow. By enriching visual information of an answer, a multimedia database, or referred to as a multimedia question and a corresponding answer database, that is, a multimedia answer database corresponding to the text question is established.

In step S402, acquire a text feature and a keyword of each text question or the corresponding text answer or both from the network.

Specifically, before the text feature, the keyword and the semantic category of each text question or the corresponding text answer or both are acquired, a pre-processing operation such as English word string identification tokenization, word segmentation, part-of-speech tagging, and stop word filtering may be performed on the each text question or the corresponding text answer or both. Afterward, extraction of the text feature, keyword, and semantic category is performed on the text question or the corresponding text answer or both after a pre-processing operation.

In step S403, determine, according to the text feature of any one text question, whether the any one text question needs to acquire corresponding multimedia answer information.

Specifically, the type of multimedia answer information may be divided into three kinds: (1) text+image; (2) text+video; (3) text+image+video. It is obvious that an answer that only has a text does not belong to multimedia information. The determining process is mainly divided into two steps: firstly, a question is determined based on a question word in the text question, and then some simple questions may be directly determined whether to be answered by using a text answer. Secondly, for a remaining question, a Naive Bayes categorizer or the like is used to determine whether the any one text question needs to acquire corresponding multimedia answer information.

In step S404, when a determination result is yes, one piece or a plurality of pieces of multimedia answer information corresponding to the any one text question is acquired according to the keyword of the any one text question or the corresponding text answer or both.

Specifically, the step S404 specifically includes the following steps:

> acquire, according to the keyword of the any one text question or the corresponding text answer or both, one piece or a plurality of pieces of multimedia information relevant to the keyword;
> acquire, in a network image resource according to the keyword, visual image information corresponding to the keyword;
> establish a mapping between the text question and the multimedia information by using a visual concept detection sub-algorithm;
> acquire, according to the mapping, one piece or a plurality of pieces of multimedia answer information corresponding to the keyword; and
> sort the one piece or a plurality of pieces of multimedia answer information according to a pre-established and gradient Boosting based sorting algorithm and a relevancy with the any one text question.

During a specific implementation process, a keyword of the any one text question or the corresponding text answer or both serve as an input of a network search engine, so as to acquire relevant multimedia information, and the relevant multimedia information may be one piece or a plurality pieces. In this case, an available network resource includes an image and video sharing website such as Flickr and YouTube. It can be known when a searching result is analyzed: under actual conditions, not all the multimedia information relevant to the keyword is relevant to the text question, that is, may not be multimedia answer information. In addition, in order to exclude irrelevant information and accurately acquire one piece or a plurality of pieces of multimedia answer information corresponding to the keyword, filtering needs to be performed by using an established mapping between the text question and the multimedia information. The mapping is mainly implemented by using a visual concept detection sub-algorithm, where the visual concept detection sub-algorithm is combined by AdaBoost and Z-grid algorithms, and the implementation principle of the visual concept detection sub-algorithm is the same as that in Embodiment 2 and is not described again herein.

Further, after one piece or a plurality of pieces of multimedia answer information corresponding to the keyword is accurately obtained, because there is usually a plurality of pieces of acquired multimedia answer information, and the relevancy of each piece of information with the text question is different, the one piece or a plurality of pieces of multimedia answer information needs to be effectively sorted according to the relevancy with the any one text question, so that when a question input by the user is answered online, the information can be displayed according to the relevancy, thereby increasing the user usage experience. A specific process for establishing a gradient Boosting based sorting algorithm used in the embodiment of the present invention is as that described in Embodiment 2 and is not described again herein.

In step S405, a semantic category belonging to the multimedia database and corresponding to the any one text question is acquired according to the keyword of the any one text question or the corresponding text answer or both.

Specifically, a semantic category belonging to the multimedia database and corresponding to the any one text question can be acquired according to a pre-established probabilistic latent semantic model with reference to the keyword of any one text question or a corresponding text answer or both. For example, K semantic categoryes that are pre-created in a multimedia database indicate that the multimedia data may be divided into K types in a potential semantic space, that is, the multimedia data implies K categories, such as tourism, sports, and politics. By analyzing any one text question or answer or both, a probability, to which the text question belongs, of each category in the K categories is acquired, thereby obtaining K probability values, and a semantic category corresponding to the greatest probability value is a category to which the text question belongs.

In step S406, establish a correspondence among the semantic category, the text feature, and the one piece or a plurality of pieces of multimedia answer information that are corresponding to the any one text question in the multimedia database.

Specifically, for a text question "How to drive an automatic car?", a semantic category included in the multimedia database may be divided into two kinds of semantics, or referred to as concepts: one is a target concept, which is corresponding a noun in a corresponding text that is used to describe an object of an action; the other is an action concept, which is corresodning to a gerund form that combines a corresponding verb and a noun and serves as an action concept describing an action in a question. In the example, a corresponding semantic category may be a noun concept "car" or "automatic car", and a corresponding verb concept is "driving" or "driving an automatic car". The text feature corresponding to the question may be "Learning to drive", "Automatic car", and the like, and suitable multimedia answer information should include a scenario content that a person is driving a car or is teaching how to drive a car. A relationship among a semantic category, a text feature, and a corresponding multimedia answer corresponding to a question may be established in the multimedia database. Different questions may belong to a same category, and corresponding text features may be different. Therefore, a correspondence among the semantic category, the text feature and one piece or a plurality of pieces of multimedia answer information that are corresponding to any one text question may be established according to the collected text question and corresponding answer, and is stored in the multimedia database.

In addition, in the multimedia question answering method, a correspondence among the semantic category, the corresponding text feature, and the multimedia answer information in the multimedia database may further be updated in real time.

Specifically, after a text question and a corresponding text answer are detected in real time to be added to a network question answering community, and after a proper a pre-processing operation is performed on the text question and the text answer, a text feature, a keyword and a semantic category of the text question or the corresponding text answer or both are extracted. When an established multimedia database includes the semantic category and needs to acquire multimedia answer information corresponding to the question, multimedia answer information corresponding to the question is acquired, and a text feature and a multimedia answer corresponding to the question is stored to a location corresponding to the semantic category and storing the text feature and multimedia answer, so as to update the database. Otherwise, the foregoing operations need not to be performed, thereby implementing online update operations on the media database in real time, and ensuring the real time of the automatic question answering system.

In the embodiment of the present invention, the multimedia question answering method implements an objective of previously establishing a multimedia database, so that an unnecessary and disordered questions and corresponding answers on the network are organized, and can be categorized according to the semantic category. All text features that is under each semantic category and correspondingly belongs to the semantic category are gathered, and a multimedia answer corresponding to each text feature is gathered. The multimedia answer set can also comprehensively consider factors such as text, visual, and network information. By effectively sorting the multimedia answer information, a user can retrieve an accurate and relevant answer more conveniently.

A person of ordinary skill in the art may understand that all or a part of the steps of the methods in the embodiments may be implemented by a program instructing relevant hardware. The program may be stored in a computer readable storage medium, such as a ROM/RAM, a magnetic disk, or an optical disc.

Embodiments of the present invention provide a multimedia question answering system including a question input unit, a parsing unit, a category determining unit, a similarity acquiring unit and a multimedia answer output unit. A text question input by a user is parsed to acquire feature information and a semantic category of the text question. When the semantic category exists in the preset multimedia database, the feature information is matched with all text features corresponding to the semantic category in the multimedia database, so as to acquire a similarity between each text feature and the feature information. A corresponding text feature is acquired when the similarity is greater than a preset threshold, and multimedia answer information corresponding to the text feature and prestored in the multimedia database is output. Therefore, an objective that an expressive force of an answer is strengthened through multimedia information such as an image and a video, the question of the user is answered by using the multimedia answer information vividly and intuitively, thereby effectively satisfying a need of the user.

The foregoing descriptions are merely exemplary embodiments of the present invention, but are not intended to limit the present invention. Any modification, equivalent replacement, or improvement made without departing from the spirit and principle of the present invention should fall within the protection scope of the present invention.

**Claims**

1. A multimedia question answering system, comprising:

    a question input unit, configured to receive a text question input by a user;
    a parsing unit, configured to acquire feature information and a semantic category of the text question by parsing;
    a category determining unit, configured to determine whether the semantic category exists in a preset multimedia database;
    a similarity acquiring unit, configured to, when a result output by the category determining unit is yes, match the feature information with all text features corresponding to the semantic category in the multimedia database, so as to acquire a similarity between each text feature and the feature information; and
    a multimedia answer output unit, configured to acquire a corresponding text feature when the similarity is greater than a preset threshold, and output multimedia answer information corresponding to the text feature and prestored in the multimedia database.

2. The system according to claim 1, wherein the system further comprises:

    a text answer output unit, configured to, when the result output is no by the category determining unit or when none of the similarity output by the similarity acquiring unit is greater than the preset threshold, directly acquire text answer information relevant to the text question from a network and output the acquired text answer information .

3. The system according to claim 1, wherein the system further comprises:

    a collecting unit, configured to collect various text questions and corresponding text answers in a network question answering community;
    a feature extraction unit, configured to acquire a text feature and a keyword of each text question or the corresponding text answer or both from the network;
    a multimedia determining unit, configured to determine, according to the text feature of any one text question, whether the any one text question needs to acquire corresponding multimedia answer information;
    a multimedia answer acquiring unit, configured to, when a result output by the multimedia determining unit is yes, acquire, according to the keyword of the any one text question or the corresponding text answer or both, one piece or a plurality of pieces of multimedia answer information corresponding to the any one text question;
    a category acquiring unit, configured to acquire, according to the keyword of the any one text question or the corresponding text answer or both, a semantic category belonging to the multimedia database and corresponding to the any one text question; and
    a database establishing unit, configured to establish a correspondence among the semantic category, the text feature, and the one piece or a plurality of pieces of multimedia answer information that are corresponding to the any one text question in the multimedia database.

4. The system according to claim 3, wherein the multimedia answer acquiring unit specifically comprises:

    a multimedia information acquiring unit, configured to acquire, according to the keyword of the any one text question or the corresponding text answer or both, one piece or a plurality of pieces of multimedia information relevant to the keyword;
    a multimedia answer acquiring subunit, configured to acquire, according to a pre-established mapping between the text question and the multimedia information, one piece or a plurality of pieces of multimedia answer information corresponding to the keyword; and
a sorting unit, configured to sort the one piece or a plurality of pieces of multimedia answer information according to a pre-established and gradient Boosting based sorting algorithm and a relevancy with the any one text question.

5. The system according to claim 4, wherein the system further comprises:

an image information acquiring unit, configured to acquire, in a network image resource according to the keyword, visual image information corresponding to the keyword; and
a mapping establishing unit, configured to establish a mapping between the text question and the multimedia information by using a visual concept detection sub-algorithm.

6. The system according to claim 3, wherein the system further comprises:

a database update unit, configured to update the correspondence among the semantic category, the corresponding text feature, and the multimedia answer information in the multimedia database in real time.

7. A multimedia question answering method, wherein the method comprises the following steps:

receiving a text question input by a user;
acquiring feature information and a semantic category of the text question by parsing;
determining whether the semantic category exists in a preset multimedia database;
when an output result is yes, matching the feature information with all text features corresponding to the semantic category in the multimedia database, so as to acquire a similarity between each text feature and the feature information; and
acquiring the corresponding text feature when the similarity is greater than a preset threshold, and outputting multimedia answer information corresponding to the text feature and prestored in the multimedia database.

8. The method according to claim 7, wherein the method further comprises:

when a determining result is no, or when none of the similarity between each text feature and the feature information is greater than a preset threshold, directly acquiring text answer information relevant to the text question from a network and outputting the acquired text answer information.

9. The method according to claim 7, wherein the method further comprises:

collecting various text questions and corresponding text answers in a network question answering community;
acquiring a text feature and a keyword of each text question or the corresponding text answer or both from the network;
determining, according to the text feature of any one text question, whether the any one text question needs to acquire corresponding multimedia answer information;
when the determining result is yes, acquiring, according to the keyword of the any one text question or the corresponding text answer or both, one piece or a plurality of pieces of multimedia answer information corresponding to the any one text question;
acquiring, according to the keyword of the any one text question or the corresponding text answer or both, a semantic category belonging to the multimedia database and corresponding to the any one text question; and
establishing a correspondence among the semantic category, the text feature, and the one piece or a plurality of pieces of multimedia answer information that are corresponding to the any one text question in the multimedia database.

10. The method according to claim 9, wherein the method further comprises:

updating the correspondence among a semantic category, a corresponding text feature, and multimedia answer information in the multimedia database in real time.

Question input unit — 11

Parsing unit — 12

category determining unit — 13

Similarity acquiring unit — 14

Multimedia answer output unit — 15

FIG. 1

```
┌─────────────────────────────────┐
│        Collecting unit          │────  21
└─────────────────────────────────┘
                 │
                 ▼
┌─────────────────────────────────┐
│     Feature extraction unit     │────  22
└─────────────────────────────────┘
                 │
                 ▼
┌─────────────────────────────────┐
│   Multimedia determining unit   │────  23
└─────────────────────────────────┘
                 │
                 ▼                        ──  24
┌─────────────────────────────────────┐
│   Multimedia answer acquiring unit   │
│  ┌────────────────────────────────┐  │
│  │ Multimedia information acquiring│──┼──  241
│  │            unit                 │  │
│  └────────────────────────────────┘  │
│                 │                     │
│                 ▼                     │
│  ┌────────────────────────────────┐  │
│  │   Multimedia answer acquiring   │──┼──  242
│  │            subunit              │  │
│  └────────────────────────────────┘  │
│                 │                     │
│                 ▼                     │
│  ┌────────────────────────────────┐  │
│  │         Sorting unit            │──┼──  243
│  └────────────────────────────────┘  │
└─────────────────────────────────────┘
                 │
                 ▼
┌─────────────────────────────────┐
│      category acquiring unit     │────  25
└─────────────────────────────────┘
                 │
                 ▼
┌─────────────────────────────────┐
│   Relationship establishing unit │────  26
└─────────────────────────────────┘
```

FIG. 2

```
┌─────────────────────────────────────────────────────────┐
│         Receive a text question input by a user          │ ⟋— S301
└─────────────────────────────────────────────────────────┘
                            │
                            ▼
┌─────────────────────────────────────────────────────────┐
│   Acquire feature information and a semantic class of     │ ⟋— S302
│            the text question by parsing                   │
└─────────────────────────────────────────────────────────┘
                            │
                            ▼
┌─────────────────────────────────────────────────────────┐
│  acquire feature information and a semantic category of   │ ⟋— S303
│         the text question by parsing                      │
└─────────────────────────────────────────────────────────┘
                            │
                            ▼
┌─────────────────────────────────────────────────────────┐
│    When the determining result is yes, match the feature  │ ⟋— S304
│  information with all text features corresponding to the   │
│  semantic class in the multimedia database, so as to      │
│  acquire a similarity between each text feature and the    │
│  feature information                                       │
└─────────────────────────────────────────────────────────┘
                            │
                            ▼
┌─────────────────────────────────────────────────────────┐
│  Acquire a corresponding text feature when the similarity  │ ⟋— S305
│  is greater than a preset threshold value, and output      │
│  multimedia answer information corresponding to the text    │
│  feature and prestored in the multimedia database          │
└─────────────────────────────────────────────────────────┘
```

FIG. 3

| | |
|---|---|
| Collect various text questions and corresponding text answers in a network question and answer community | S401 |

↓

| | |
|---|---|
| Acquire a text feature and a keyword of each text question or the corresponding text answer or both from the network | S402 |

↓

| | |
|---|---|
| Determine, according to the text feature of any one text question, whether the any one text question needs to acquire corresponding multimedia answer information | S403 |

↓

| | |
|---|---|
| when a determination result is yes, one piece or a plurality of pieces of multimedia answer information corresponding to the any one text question is acquired according to the keyword of the any one text question or the corresponding text answer or both | S404 |

↓

| | |
|---|---|
| a semantic category belonging to the multimedia database and corresponding to the any one text question is acquired according to the keyword of the any one text question or the corresponding text answer or both | S405 |

↓

| | |
|---|---|
| establish a correspondence among the semantic category, the text feature, and the one piece or a plurality of pieces of multimedia answer information that are corresponding to the any one text question in the multimedia database | S406 |

FIG. 4

# INTERNATIONAL SEARCH REPORT

| International application No. |
|---|
| **PCT/CN2012/083622** |

**A.  CLASSIFICATION OF SUBJECT MATTER**

G06F 17/30 (2006.01) i

According to International Patent Classification (IPC) or to both national classification and IPC

**B.  FIELDS SEARCHED**

Minimum documentation searched (classification system followed by classification symbols)

IPC: G06F 17/-

Documentation searched other than minimum documentation to the extent that such documents are included in the fields searched

Electronic data base consulted during the international search (name of data base and, where practicable, search terms used)

CNKI, CPRSABS, VEN: multimedia, interlocution, catechetical, question answering, QA, voice, picture, video, audio, similarity, threshold, category

**C.  DOCUMENTS CONSIDERED TO BE RELEVANT**

| Category* | Citation of document, with indication, where appropriate, of the relevant passages | Relevant to claim No. |
|---|---|---|
| Y | CN 101174259 A (ZHANG, Yanliang), 07 May 2008 (07.05.2008), description, page 2, line 1 to page 3, line 17 | 1-2, 7-8 |
| A | | 3-6, 9-10 |
| Y | CN 102332137 A (NEWHEIGHT CORPORATION LIMITED), 25 January 2012 (25.01.2012), description, paragraphs 6-15 | 1-2, 7-8 |
| A | | 3-6, 9-10 |

☐ Further documents are listed in the continuation of Box C.         ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 13 February 2013 (13.02.2013) | **28 February 2013 (28.02.2013)** |

| Name and mailing address of the ISA/CN: State Intellectual Property Office of the P. R. China No. 6, Xitucheng Road, Jimenqiao Haidian District, Beijing 100088, China Facsimile No.: (86-10) 62019451 | Authorized officer **LI, Yuanye** Telephone No.: (86-10) **62411751** |
|---|---|

Form PCT/ISA/210 (second sheet) (July 2009)

## INTERNATIONAL SEARCH REPORT
Information on patent family members

| | International application No. |
|---|---|
| | **PCT/CN2012/083622** |

| Patent Documents referred in the Report | Publication Date | Patent Family | Publication Date |
|---|---|---|---|
| CN 101174259 A | 07.05.2008 | None | |
| CN 102332137 A | 25.01.2012 | None | |

Form PCT/ISA/210 (patent family annex) (July 2009)